# EUROPÄISCHE PATENTSCHRIFT

(11) **EP 2 687 818 B1**
(45) Veröffentlichungstag und Bekanntmachung des Hinweises auf die Patenterteilung: **29.08.2018**
(21) Anmeldenummer: 13003113.1
(22) Anmeldetag: 19.06.2013
(51) Int. Cl.: G01C 21/32

(54) **Verfahren und Vorrichtung zur Kartierung von Straßenzuständen**
Method and device for mapping of road conditions
Procédé et dispositif pour cartographier des états routiers

(30) Priorität: 20.07.2012 DE 102012014331
(43) Veröffentlichungstag der Anmeldung: 22.01.2014
(73) Patentinhaber: MAN Truck & Bus AG, 80995 München (DE)
(72) Erfinder: Döring, Andreas, 82008 München (DE)
(74) Vertreter: Liebl, Thomas

(56) Entgegenhaltungen:
- JP-A- 2004 332 296
- US-A1- 2012 053 805
- US-B1- 6 484 089
- JAKOB ERIKSSON ET AL: "The pothole patrol", PROCEEDINGS OF THE SIXTH INTERNATIONAL CONFERENCE ON MOBILE SYSTEMS, APPLICATIONS, AND SERVICES : BRECKENRIDGE, COLORADO, USA, JUNE 17 - 20, 2008, 1. Januar 2008 (2008-01-01), Seite 29, XP055234408, New York, NY DOI: 10.1145/1378600.1378605 ISBN: 978-1-60558-139-2

## Beschreibung

Die Erfindung betrifft ein Verfahren zur Kartierung von Straßenzuständen nach dem Oberbegriff des Anspruchs 1.

Ein bekanntes Verfahren zur Kartierung von Straßenzuständen besteht darin, dass eine Person eine zu beurteilende Strecke abfährt und individuell den Straßenzustand durch Augenschein bewertet und notiert. Damit können beispielsweise Straßenbauämter die Straßenzustände in ihrem Arbeitsbereich großflächig erfassen und die Bewertungsergebnisse der Planung von Reparaturarbeiten wie Ausbesserung von Frostschäden, Belagserneuerungen, etc. zugrunde legen. Weiter ist es bekannt, Straßenzustände, insbesondere Straßenschäden photographisch zu erfassen.

Aus der gattungsbildenden US 6 484 089 B1 ist ein in ein Fahrzeug eingebautes Fahrzeugnavigationssystem bekannt, in dem in Verbindung mit einem Beschleunigungssensor Fahrbahnzustandsdaten erfasst, ausgewertet und abgespeichert werden können.

Gemäß der JP 2004-332296 A werden Fahrbahnzustandsdaten mit Hilfe eines Messwagens erfasst, wobei der Messwagen von einem Fahrzeug gezogen wird.

Zur Bewertung von Straßenzuständen wird gemäß der US 2012/0053805 A1 ein Mobiltelefon mit einem Beschleunigungssensor verwendet, wobei der Beschleunigungssensor Beschleunigungen in x-, y- und z-Richtung detektiert.

Aufgabe der Erfindung ist es, ein einfaches automatisiertes Verfahren zur Kartierung von Straßenzuständen vorzuschlagen, wobei die damit erhaltene Kartierung für eine Mehrzahl unterschiedlicher Verwendungen eingesetzt werden kann.

Diese Aufgabe wird mit den Merkmalen des Anspruchs 1 gelöst. Gemäß Anspruch 1 ist vorgesehen, dass am Körper, in oder an einem Fahrzeug während der Fortbewegung ein Beschleunigungssensor zur Messung vertikaler Beschleunigungen mitgeführt und aktiviert wird, der kontinuierlich Beschleunigungsmesssignale für eine Auswertung abgibt. Dabei werden durch Fahrbahnunebenheiten und/oder Steigungen bedingte, vertikale Beschleunigungen detektiert und über definierte Größen aufeinanderfolgender Beschleunigungsmesssignale eine Bewertung des aktuellen Zustands des Untergrunds durchgeführt.

Für eine solche messtechnische Erfassung und Bewertung eines Zustands des Untergrunds wird die Kenntnis verwendet, dass ein Körper während der Fortbewegung auf ebenem Untergrund weitgehend ruhig liegt, bei Fahrbahnunebenheiten je nach deren Größe und Häufigkeit jedoch mehr oder weniger starke vertikale Auslenkungen erfährt. Die dadurch entstehenden vertikalen Beschleunigungen werden erfindungsgemäß messtechnisch durch wenigstens einen Beschleunigungssensor erfasst, und die Größe der Beschleunigungsmesssignale wird für eine Bewertung des aktuellen Straßenzustands herangezogen.

Für eine Kartierung wird während der Fortbewegung ein aktiviertes Positionserfassungssystem (zum Beispiel ein GPS-Gerät) mitgeführt, welches aufeinanderfolgende Positionsdaten zur Bestimmung der aktuellen Position und zur Dokumentation der aktuellen Fahrstrecke/Straße erzeugt. Die jeweils während der Fahrt ermittelten aktuellen, den vorliegenden Zustand detektierenden Beschleunigungsmesssignale und die damit erhaltenen Bewertungsergebnisse für den Straßenzustand werden mit den entsprechend zugeordneten Positionsdaten zusammengeführt und in einem Speicher abgelegt, so dass eine Kartierung des Zustands des Untergrunds über die Wegstrecke im Speicher zur Verfügung steht.
Die Kartierung im Speicher kann je nach den gewünschten Aussagen unterschiedlich ausgelesen werden:
Beispielsweise können bei der Verwendung von Fahrzeugen gezielt Fahrstrecken/Straßen aufgerufen und in einem Display angezeigt werden, wobei die Straßenzustände im Streckenverlauf beispielsweise durch Farben und/oder Strichlierungen mitangezeigt werden. Andererseits können auch allgemein Schlechtwegstrecken aus dem Speicher abgerufen und auf dem Display angezeigt werden, die dann gegebenenfalls vermieden werden können.
Für eine differenzierte Straßenzustandsbewertung, beispielsweise in mehreren abgestuften Kategorien, wird vorgeschlagen, die Größe und/oder die Häufigkeit von Beschleunigungsmesssignalen mittels entsprechend abgestuften Schwellwertbereichen auszuwerten. Damit können beispielsweise einem Fahrer Informationen zur Verfügung gestellt werden, welche Fahrstrecken mit mehr oder weniger hohen Komforteinbußen befahren werden können. Dies kann bei einer Anzeige in einem Display beispielsweise durch mehr oder weniger intensive Farbgebung oder Strukturierung eines Straßenverlaufs angegeben werden. Auch schriftliche oder nummerische Angaben zu bestimmten Straßenverläufen sind möglich.

Da einzelne hohe oder niedrige Beschleunigungsmesssignale noch keine exakte Bewertung des aktuellen Straßenzustands ergeben, wird zudem vorgeschlagen, die aktuellen Beschleunigungsmesssignale in definierten, relativ kurzen aufeinanderfolgenden Messzeiten in einer Mittelwertbetrachtung auszuwerten und gegebenenfalls unter Einbeziehung der vorstehenden Schwellwertbereiche einen "guten", "mittleren", "schlechten" oder "katastrophalen" Fahrbahnzustand festzustellen. Dieses Ergebnis kann dann jeweils am Messzeitende mit den vorliegenden Positionsdaten kombiniert und gespeichert werden.

Da von Fahrbahnunebenheiten angeregte vertikale Fahrzeugbewegungen und deren Auswertung zwischen unterschiedlichen Fahrzeugtypen variieren und insbesondere vom Fahrwerk, der Aufhängung der Fahrgastzelle, der Dämpfung, der Lage des Sensors, etc. abhängen, wird vorgeschlagen, dass die Schwellwertbereiche und/oder die vorstehenden Bewertungsergebnisse zusätzlich mit fahrzeugspezifischen Gegebenheiten bewertet werden, um zu möglichst genauen Straßenzustandsaussagen zu gelangen. Erfindungsgemäß werden die Beschleunigungsmesssignale zusätzlich mit für das gesamte Schwingungssystem spezifische Gegebenheiten bewertet.

Dies kann beispielsweise durch manuelle Eingabe der Fahrzeugdaten erfolgen. Mehr Komfort ergibt sich allerdings, wenn diese Daten von einem im Fahrzeug verbauten Element zur Datenübertragung automatisch zur Verfügung gestellt werden.

Ist dies nicht der Fall bzw. nicht möglich oder wird der Sensor am Körper getragen, wird ein anderes Verfahren angewendet: Hierfür wird an bekannten Referenzpunkten, an denen die Höhe der lokalen, vertikalen Auslenkung bekannt ist, die vertikalen Beschleunigungen mit den für diese Referenzpunkten bekannten Referenzwerten verglichen und wenigstens ein Korrekturwert ermittelt, mit dem die spezifischen Gegebenheiten des Schwingungssystems korrigiert werden.

Als Referenzpunkte kommen ortsfeste, unveränderliche Gegebenheiten, die eine signifikante vertikale Auslenkung aufweisen, in Frage. Dies sind beispielsweise Bahnübergänge, Gullideckel, Ausdehnungsfugen von Brücken, Bordsteinkanten, Treppen usw..

Erfindungsgemäß bilden der Beschleunigungssensor, das Positionserfassungssystem, die Auswerteeinheit und der Speicher eine Baueinheit, d.h. diese Bauteile sind in einer möglichst kompakten, tragbaren Baueinheit zusammengefasst, welche zur Kartierung von Straßenzuständen dann lediglich in einem Fahrzeug mitgeführt werden muss.

Erfindungsgemäß ist diese Baueinheit in ein tragbares Mobiltelefon (Handy) unter Verwendung eines miniaturisierten Beschleunigungssensors (MEMS, Micro-Electro-Mechanical-System) integriert.

Mit Beschleunigungssensoren ausgestattete Handys sind auf dem Markt mit zunehmender Tendenz bereits erhältlich. Diese Sensoren werden beispielsweise zur Drehung von Bildschirmansichten, für Spiele und zu Richtungsangaben verwendet, wobei das Handy entsprechend vom Benutzer bewegt wird. Dabei werden miniaturisierte Beschleunigungssensoren (MEMS) als Feder-Masse-System üblicherweise aus Silizium herausgeätzt und hergestellt. Die Federn sind dabei kleine Silizium-Beinchen, welche eine Silizium-Masse halten und abstützen. Deren Auslenkung wird bei einer Beschleunigung kapazitiv oder piezoresistiv erfasst und als Beschleunigungsmesssignal ausgegeben. Solche bekannte Beschleunigungssensoren haben durch hohe Stückzahlen geringe Stückkosten und weisen eine hohe Zuverlässigkeit auf.

In Handys ist für die bekannten Anwendungen üblicherweise eine Drei-Achsen-MEMS-Sensorik verwendet, welche Beschleunigungen in allen Raumrichtungen erfasst und auswertet. Da für die erfindungsgemäße Bewertung von Straßenzuständen ausschließlich vertikale Beschleunigungen ausgewertet werden, werden erfindungsgemäß bei einer Drei-Achsen-MEMS-Sensorik mittels geeigneter Software nur die Vertikalbeschleunigung zur Bewertung des Straßenzustands herangezogen.

Ein erfindungsgemäß mit einer Straßenzustandsanzeige ausgerüstetes Handy kann beispielsweise für Berufsfahrer, insbesondere Truckfahrer, hilfreich bei der Routenwahl zur Vermeidung von Schlechtwegstrecken sein.

Anhand einer Zeichnung wird die Erfindung weiter erläutert.

Es zeigen:
- Fig. 1: eine Darstellung zur Verdeutlichung des Prinzips zur Erfassung eines Straßenzustands;
- Fig. 2: ein Blockschaltbild eines in ein Handy integrierten Erfindungsgegenstands, und
- Fig. 3: ein Beschleunigungsmesssignal eines in einem Fahrzeug mitgeführten Beschleunigungssensors, wenn das Fahrzeug durch eine Bodenwelle fährt.

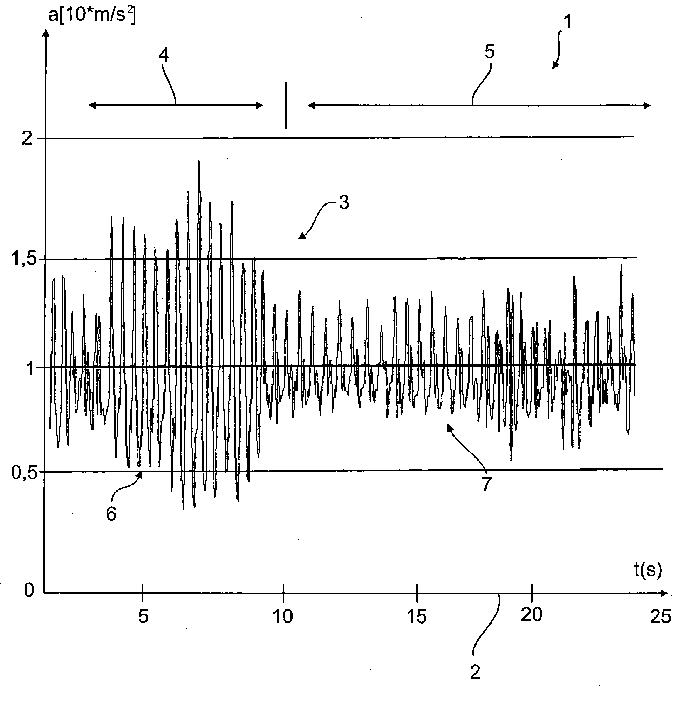

In Fig. 1 ist ein Diagramm 1 gezeigt, bei dem über einer Zeitachse 2 Beschleunigungsmesssignale 3 eines Beschleunigungssensors aufgezeichnet sind. Der dazu verwendete Beschleunigungssensor ist von einer (nicht dargestellten) Person am Körper getragen worden, welche in einem ersten Zeitbereich 4 auf einer Treppe und im anschließenden Zeitbereich 5 in einer Ebene gegangen ist.

Beim Treppensteigen im Zeitbereich 4 wurde der Körper der Person zwangsläufig mit großen vertikalen Beschleunigungen bewegt, welche zu relativ großen Beschleunigungsmesssignalen 6 geführt haben. Beim anschließenden Gehen in der Ebene wurde der Körper der Person relativ gleichmäßig bewegt, so dass dadurch nur verhältnismäßig kleine Beschleunigungsmesssignale 7 abgegeben wurden.

Bei einer Übertragung dieses Prinzips auf den Erfindungsgegenstand wird zusätzlich zum menschlichen Körper ein Fahrzeug betrachtet, welches bei großen Fahrbahnunebenheiten zu großen vertikalen Beschleunigungen und bei ebener Fahrbahn nur zu geringen vertikalen Beschleunigungen angeregt wird. Durch Auswertung der entsprechenden Beschleunigungsmesssignale und eine Verknüpfung und Abspeicherung mit Positionswerten kann eine entsprechende Kartierung der Straßenzustände erfolgen.

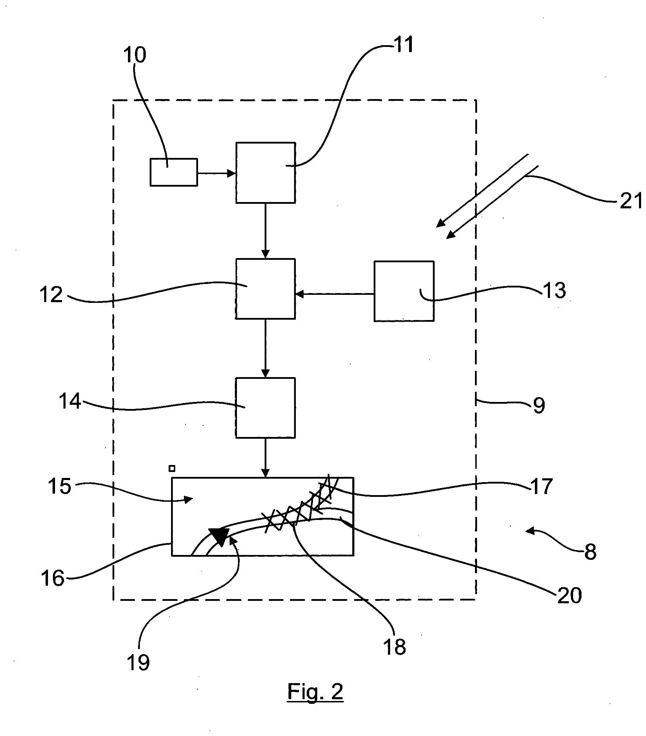

Im Blockschaltbild der Fig. 2 ist in einem Handy 8 (abstrahiert durch die strichlierte Linie 9 dargestellt) ein miniaturisierter Beschleunigungssensor 10 (MEMS) enthalten, dem eine Auswerteeinheit 11 nachgeordnet ist. In der Auswerteeinheit 11 werden bei einem in einem Fahrzeug mitgeführten Handy 8 die Beschleunigungsmesssignale hinsichtlich vertikaler Beschleunigungen ausgewertet und eine Information über den aktuellen Straßenzustand generiert.

Diese Information wird einer Verarbeitungseinheit 12 zugeführt, an die zusätzlich ein Positionserfassungssystem 13 (GPS) angeschlossen ist. Dieses wertet zur Positionsbestimmung Satellitensignale (dargestellt durch Pfeile 21) aus.

In der Verarbeitungseinheit 12 werden die Positionsdaten und Straßenzustandsdaten zusammengeführt und gegebenenfalls mit fahrzeugspezifischen Gegebenheiten bewertet sowie in einem nachgeordneten Speicher 14 abgelegt.

Die damit im Speicher 14 enthaltene Kartierung kann beispielsweise in Verbindung mit einer Routendarstellung 15 abgerufen und in einem Display 16 dargestellt werden. In der Routendarstellung 15 ist hier eine aus dem Speicher 14 abgerufene Schlechtwegstrecke 17 mit einer Warnstruktur 18 unterlegt.

Der Pfeil 19 zeigt die aktuelle Position des Fahrzeugs und der Fahrer kann erkennen, dass er sich einer Schlechtwegstrecke 17 in Kürze nähert, welche nach links abbiegt. Falls möglich kann er auf die abzweigende Straße 20 mit einer besseren Fahrbahnbeschaffenheit ausweichen.

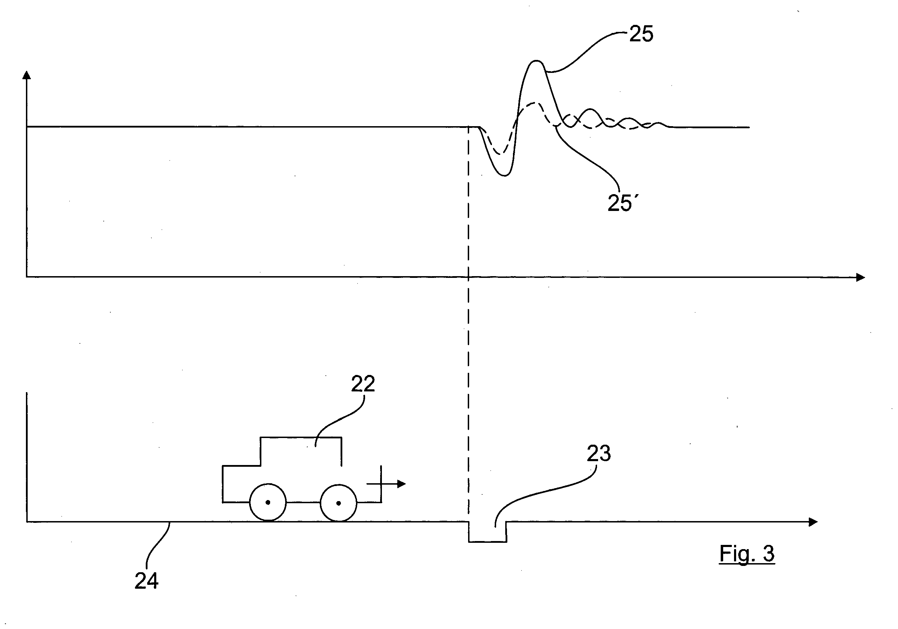

In Fig. 3 unten ist schematisch ein Fahrzeug 22 dargestellt, welches durch eine konkave Bodenwelle 23 einer Straße 24 fährt. Darüber ist ein zugeordnetes Beschleunigungsmesssignal 25 eines im Fahrzeug 22 von einer Person mitgeführten Beschleunigungssensors dargestellt, das die vertikalen Beschleunigungen des Fahrzeugaufbaus beim und nach dem Durchfahren der Bodenwelle 23 zeigt. Ersichtlich ergibt sich durch die Fahrzeugfederung/- dämpfung ein Beschleunigungsmesssignal als Wellenzug mit großen Anfangsamplituden, die schnell abklingen. Bei einer Bewertung eines Straßenzustands werden somit entsprechende aufeinanderfolgende und sich gegebenenfalls überlagernde Wellenzüge betrachtet und ausgewertet. Zudem ist in Fig. 3 strichliert und beispielhaft ein Wellenzug 25' mit kleineren Amplituden eingezeichnet, wie er sich bei einem Fahrzeug mit anderer Fahrwerkauslegung/-einstellung ergeben kann. Um basierend auf den Wellenzügen 25 und 25' vergleichbare Bewertungen zu erhalten, sind Anpassungen mit fahrzeugspezifischen Parametern erforderlich.

Um die Informationen über Schlechtwegstrecken bzw. den Zustand des Untergrunds anderen Verkehrsteilnehmern zur Verfügung zu stellen, werden diese via Datenfernübertragung (z. B. WLAN, UMTS, LTE, Bluetooth) zur Verfügung gestellt. Hier sind der Beschleunigungssensor, die Einheit zur Positionsbestimmung und die Bauteile zur Übertragung zu einem Bauteil zusammengefasst.

Der Datenaustausch erfolgt erfindungsgemäß direkt zwischen zwei Kommunikationsteilnehmern oder kann über eine Zwischenstation erfolgen, was nicht von der Erfindung umfasst ist. Bei der Variante über die Zwischenstation bietet es sich an, die Daten dort zwischenzuspeichern, so dass auch andere Teilnehmer darauf zugreifen können. Zudem ermöglicht diese Variante die Möglichkeit, die Daten dort derart aufzubereiten und mit den von anderen Teilnehmern übermittelten Daten zusammenzuführen, dass eine Kartierung großer Bereiche, inklusive der Informationen über den Untergrund, vollautomatisch möglich wird. Hierbei ist die oben erwähnte Korrektur der spezifischen Gegebenheiten des jeweiligen Schwingungssystems, von dem die Daten generiert werden, notwendig, um diese mit Daten anderer Teilnehmer, die die Messungen an einem anderen Schwingungssystem, wie beispielsweise einem anderen Fahrzeugtyp, vorgenommen haben zu einer für alle Teilnehmer gültigen Karte zusammenzufassen.

Wie bereits erwähnt, beschränkt sich die Erfindung nicht auf das Mitführen des Beschleunigungssensors in einem Fahrzeug, wie Kraftfahrzeug, Zug, Motorrad oder Fahrrad, sondern auch darauf, dass der Sensor am Körper bzw. auf oder in der Kleidung getragen wird.

### Bezugszeichenliste

- 1.: Diagramm
- 2: Zeitachse
- 3: Beschleunigungsmesssignale
- 4: Zeitbereich
- 5: Zeitbereich
- 6: große Beschleunigungsmesssignale
- 7: kleine Beschleunigungsmesssignale
- 8: Handy
- 9: strichlierte Linie
- 10: Beschleunigungssensor
- 11: Auswerteeinheit
- 12: Verarbeitungseinheit
- 13: Positionserfassungssystem
- 14: Speicher
- 15: Routendarstellung
- 16: Display
- 17: Schlechtwegstrecke
- 18: Warnstruktur
- 19: Pfeil
- 20: Straße
- 21: Pfeile
- 22: Fahrzeug
- 23: Bodenwelle
- 24: Straße
- 25: Wellenzug

## Patentansprüche

1. Verfahren zur Kartierung von Straßenzuständen,
wobei während der Fortbewegung einer Person in einem Fahrzeug (22) ein Beschleunigungssensor (10) zur Messung vertikaler Beschleunigungen in oder an dem Fahrzeug (22) mitgeführt und aktiviert wird, der kontinuierlich Beschleunigungsmesssignale für eine Auswertung abgibt, wobei durch Fahrbahnunebenheiten oder Steigungen bedingte, vertikale Beschleunigungen detektiert werden und über aufeinanderfolgende Beschleunigungsmesssignale eine Bewertung (11) des Zustands und/oder der Beschaffenheit des Untergrunds erfolgt,
wobei ein während der Fortbewegung aktiviertes Positionserfassungssystem (13) mitgeführt wird, welches aufeinanderfolgende Positionsdaten zur Bestimmung der aktuellen Position und zur Dokumentation der aktuell benutzten Fahrstrecke erzeugt, und
wobei die jeweils während der Fortbewegung ermittelten aktuellen, den vorliegenden Zustand und/oder die Beschaffenheit des Untergrunds detektierenden Beschleunigungsmesssignale und die damit erhaltenen Bewertungsergebnisse für den Zustand und/oder die Beschaffenheit des Untergrunds sowie die entsprechend zugeordneten aktuellen Positionsdaten zusammengeführt in einem Speicher (14) abgelegt werden, so dass eine Kartierung der Zustände und/oder der Beschaffenheit des Untergrunds über die Fahrstrecke im Speicher (14) zur Verfügung steht,
**dadurch gekennzeichnet, dass**
die Beschleunigungsmesssignale zusätzlich mit für das gesamte Schwingungssystem spezifischen Gegebenheiten bewertet werden, dass der Beschleunigungssensor (10), das Positionserfassungssystem (13), eine Auswerteeinheit (11, 12) und der Speicher (14) eine Baueinheit bilden,
dass die Baueinheit in ein tragbares Mobiltelefon (8) unter Verwendung eines micro-elektro-mechanischen Beschleunigungssensors (10) integriert ist,
dass bei einer 3-Achsen-MEMS-Sensorik mittels Software nur Vertikalbeschleunigungen zur Bewertung des Straßenzustands herangezogen werden, und
dass die Bewertungsergebnisse für den Zustand und/oder die Beschaffenheit des Untergrunds anderen Verkehrsteilnehmern direkt von dem tragbaren Mobiltelefon (8) mit Hilfe von Datenfernübertragung zur Verfügung gestellt werden.

2. Verfahren nach Anspruch 1, **dadurch gekennzeichnet, dass** der Beschleunigungssensor in dem Fahrzeug mitgeführt und am Körper oder auf oder in der Kleidung getragen wird.

3. Verfahren nach Anspruch 1 oder 2, **dadurch gekennzeichnet, dass** die Größe und/oder Häufigkeit von Beschleunigungsmesssignalen mittels Schwellwertbereichen ausgewertet und einer entsprechenden Bewertung des Zustands und/oder der Beschaffenheit des Untergrunds (11) zugeordnet werden.

4. Verfahren nach Anspruch 3, **dadurch gekennzeichnet, dass** die Schwellwertbereiche und/oder die Bewertungsergebnisse zusätzlich mit für das gesamte Schwingungssystem spezifischen Gegebenheiten, insbesondere der Fahrzeugmasse und/oder der Fahrzeugdämpfung und/oder der Art der Ankopplung und Ausrichtung des Beschleunigungssensors, bewertet werden.

5. Verfahren nach einem der vorhergehenden Ansprüche, **dadurch gekennzeichnet, dass** die für das Schwingungssystem spezifischen Gegebenheiten mit Hilfe von bekannten Referenzzuständen des Untergrunds abgeglichen werden.

6. Verfahren nach einem der Ansprüche 1 bis 5, **dadurch gekennzeichnet, dass** die Beschleunigungsmesssignale in definierten aufeinanderfolgenden Messzeiten ausgewertet werden und das Ergebnis am Messzeitende mit den vorliegenden Positionsdaten kombiniert (12) und gespeichert (14) wird.

## Claims

1. Method for mapping road conditions,
wherein, during the progressive movement of a person in a vehicle (22), an acceleration sensor (10) for measuring vertical accelerations in or at the vehicle (22) is carried along and activated and continuously emits acceleration measurement signals for evaluation, wherein vertical accelerations caused by road unevenness or slopes are detected and the condition and/or the nature of the ground is/are assessed (11) using successive acceleration measurement signals,
wherein a position capture system (13) which is activated during the progressive movement is carried along and generates successive position data for determining the current position and for documenting the currently used route, and
wherein the current acceleration measurement signals, which are each determined during the progressive movement and detect the present condition and/or the nature of the ground, and the assessment results obtained thereby for the condition and/or the nature of the ground as well as the accordingly associated current position data are stored in a combined manner in a memory (14), with the result that a mapping of the conditions and/or the nature of the ground over the route is available in the memory (14),
**characterized in that**
the acceleration measurement signals are additionally assessed with circumstances specific to the overall oscillation system,
**in that** the acceleration sensor (10), the position capture system (13), an evaluation unit (11, 12) and the memory (14) form a structural unit,
**in that** the structural unit is integrated into a portable mobile telephone (8) using a micro-electromechanical acceleration sensor (10),
**in that**, in the case of a three-axis MEMS sensor system, only vertical accelerations are used to assess the road condition by means of software, and
**in that** the assessment results for the condition and/or the nature of the ground are directly made available to other road users by the portable mobile telephone (8) with the aid of remote data transmission.

2. Method according to Claim 1, **characterized in that** the acceleration sensor is carried along in the vehicle and is worn on the body or on or in clothing.

3. Method according to Claim 1 or 2, **characterized in that** the size and/or frequency of acceleration measurement signals is/are evaluated by means of ranges of threshold values and is/are assigned to a corresponding assessment of the condition and/or the nature of the ground (11).

4. Method according to Claim 3, **characterized in that** the ranges of threshold values and/or the assessment results are additionally assessed with circumstances specific to the overall oscillation system, in particular the vehicle mass and/or the vehicle damping and/or the type of coupling and orientation of the acceleration sensor.

5. Method according to one of the preceding claims, **characterized in that** the circumstances specific to the oscillation system are compared with the aid of known reference conditions of the ground.

6. Method according to one of Claims 1 to 5, **characterized in that** the acceleration measurement signals are evaluated at defined successive measuring times and the result at the end of the measuring time is combined (12) and stored (14) with the available position data.

## Revendications

1. Procédé pour cartographier des états routiers,
dans lequel un capteur d'accélération (10) destiné à mesurer des accélérations verticales dans ou sur le véhicule (22) est transporté et activé pendant le déplacement d'une personne dans un véhicule (22), lequel un capteur d'accélération délivre en continu des signaux de mesure d'accélération en vue d'une évaluation, dans lequel des accélérations verticales dues à des irrégularités de la route ou à des gradients sont détectées et une évaluation (11) de l'état et/ou de la situation du sol est effectuée par l'intermédiaire de signaux de mesure d'accélération successifs,
dans lequel un système de détection de position activé (13) générant des données de position successives permettant de déterminer la position actuelle et de documenter l'itinéraire actuellement utilisé, est transporté pendant le déplacement, et
dans lequel les signaux de mesure d'accélération actuels détectant l'état présent et/ou la situation du sol et les résultats ainsi obtenus d'évaluation de l'état et/ou de la situation du sol et les données de position actuelles associées correspondantes sont stockés conjointement dans une mémoire (14), de manière à ce qu'une cartographie des états et/ou de la situation du sol sur la distance parcourue soit mise à disposition dans la mémoire (14),
**caractérisé en ce que** les signaux de mesure d'accélération sont en outre évalués en association avec des conditions spécifiques de l'ensemble du système oscillant,
**en ce que** le capteur d'accélération (10), le système de détection de position (13), une unité d'évaluation (11, 12) et la mémoire (14) forment une unité,
**en ce que** l'unité est intégrée dans un téléphone mobile portable (8) avec utilisation d'un capteur d'accélération microélectromécanique (10),
**en ce que** seules les accélérations verticales sont utilisées au moyen du logiciel pour évaluer l'état routier dans le cas d'un système de capteurs MEMS à 3 axes, et
**en ce que** les résultats de l'évaluation de l'état et/ou de la situation du sol sont mis à la disposition d'autres usagers de la route directement à partir du téléphone mobile portable (8) au moyen d'une transmission de données à distance.

2. Procédé selon la revendication 1, **caractérisé en ce que** le capteur d'accélération est transporté dans le véhicule et porté sur le corps ou sur ou dans les vêtements.

3. Procédé selon la revendication 1 ou 2, **caractérisé en ce que** l'amplitude et/ou la fréquence des signaux de mesure d'accélération sont évaluées au moyen de plages de valeurs de seuil et **en ce qu'**elles sont associées à une évaluation correspondante de l'état et/ou de la situation du sol (11).

4. Procédé selon la revendication 3, **caractérisé en ce que** les plages de valeurs de seuil et/ou les résultats d'évaluation sont en outre évalués avec des conditions spécifiques de l'ensemble du système oscillant, en particulier la masse du véhicule et/ou l'amortissement du véhicule et/ou le type d'accouplement et l'orientation du capteur d'accélération.

5. Procédé selon l'une des revendications précédentes, **caractérisé en ce que** les conditions spécifiques du système oscillant sont ajustées à l'aide d'états de référence connus du sol.

6. Procédé selon l'une des revendications 1 à 5, **caractérisé en ce que** les signaux de mesure d'accélération sont évalués à des instants de mesure successifs définis et **en ce que** le résultat est combiné (12) et mémorisé (14), à la fin du temps de mesure, aux données de position existantes.
